# EUROPEAN PATENT SPECIFICATION

(11) **EP 4 603 303 B1**
(45) Date of publication and mention of the grant of the patent: **02.12.2026**
(21) Application number: 25152468.2
(22) Date of filing: 17.01.2025
(51) Int. Cl.: B60C 11/03, B60C 11/12, B60C 11/00

(54) **TIRE**
REIFEN
PNEUMATIQUE

(30) Priority: 16.02.2024 JP 2024022299
(43) Date of publication of application: 20.08.2025
(73) Proprietor: Sumitomo Rubber Industries, Ltd., Kobe-shi, Hyogo-ken 651-0072 (JP)
(72) Inventor: NAKANO, Kosuke, Kobe-shi, Hyogo, 651-0072 (JP)
(74) Representative: Manitz Finsterwald Patent- und Rechtsanwaltspartnerschaft mbB

(56) References cited:
- EP-A1- 0 609 195
- EP-A1- 4 552 861
- WO-A1-2013/015799
- WO-A1-2014/196409
- WO-A1-2020/217964
- DE-A1- 102007 061 148
- DE-A1- 102020 132 609
- JP-A- 2000 142 035
- JP-A- 2014 129 008
- JP-A- S6 136 002
- JP-U- H0 335 803

## Description

### RELATED APPLICATIONS

This application claims the benefit of foreign priority to Japanese Patent Applications No. JP2024-022299, filed February 16, 2024.

### FIELD OF THE INVENTION

The present invention relates to a tire.

### BACKGROUND OF THE INVENITON

Japanese unexamined patent application publication No. 2022-080118 has proposed a tire having a tread portion provided with a plurality of first oblique grooves, a plurality of second oblique grooves, and a plurality of first longitudinal grooves each communicating with two first oblique grooves adjacent to each other, for example. This tire is expected to maintain dry performance and improve on-ice/on-snow performance by specifying the groove width of the first longitudinal grooves. Related technologies are also known from JP 2000 142035 A, EP 4 552 861 A1, WO 2013/015799 A1, and WO 2014/196409 A1.

### SUMMARY OF THE INVENTION

In recent years, as vehicle performance has improved, further improvement in the on-ice/on-snow performance is required for all-season tires that are used on both dry roads and icy and snowy roads. One way to improve the on-ice/on-snow performance would be to provide more sipes in the land regions of the tread portion. However, depending on the arrangement of the sipes, this method may excessively decrease the rigidity of the land regions, and thus impair the dry performance.

The present invention was made in view of the above, and a primary object thereof is to provide a tire with improved on-ice/on-snow performance while maintaining the dry performance. The present invention is set out in the appended claims.

The present invention is a tire having a tread portion bound with an intended tire rotational direction, wherein
the tread portion including:
a first tread edge;
a second tread edge;
a plurality of grooves provided between the first tread edge and the second tread edge; and
a plurality of blocks divided by the grooves,
wherein the grooves include a plurality of first oblique grooves, a plurality of second oblique grooves, a plurality of first shoulder longitudinal grooves, and a plurality of first crown longitudinal grooves,
each of the first oblique grooves extends obliquely to a heel side in the tire rotational direction at least from the first tread edge toward a tire equator side,
each of the second oblique grooves extends obliquely to the heel side in the tire rotational direction at least from the second tread edge toward the tire equator side,
each of the first shoulder longitudinal grooves extends in the tire circumferential direction so as to communicate with a respective two of the first oblique grooves adjacent to each other in the tire circumferential direction,
the first crown longitudinal grooves are disposed between the first shoulder longitudinal grooves and the tire equator and each communicate with two of the first oblique grooves adjacent thereto on both sides in the tire circumferential direction,
each of the first oblique grooves terminates in conjunction with one of the second oblique grooves,
each of the second oblique grooves terminates in conjunction with one of the first oblique grooves,
the blocks include a plurality of crown blocks, a plurality of first shoulder blocks, and a plurality of first middle blocks,
the crown blocks are arranged on the tire equator,
each of the first shoulder blocks includes the first tread edge and is demarcated by a respective two of the first oblique grooves adjacent to each other in the tire circumferential direction and a respective one of the first shoulder longitudinal grooves between the respective two of the first oblique grooves,
the first middle blocks are disposed between the crown blocks and the first shoulder blocks,
each of the first shoulder blocks, the first middle blocks, and the crown blocks has a ground contacting surface provided with a plurality of sipes, and
for each of the blocks, when a sipe density (mm/mm²) is defined as a value of a total length (mm) of the sipes formed on the ground contacting surface divided by an area (mm²) of the ground contacting surface, a sipe density SDc of each of the crown blocks, a sipe density SDm of each of the first middle blocks, and a sipe density SDs of each of the first shoulder blocks satisfy SDc > SDs and SDm > SDs.

By adopting the above-mentioned configuration, it is possible that the tire of the present invention improves the on-ice/on-snow performance while maintaining the dry performance.

### BRIEF DESCRIPTION OF THE DRAWINGS

FIG. 1 is a development view of a tread portion of a tire according to an embodiment of the present invention.
FIG. 2 is an enlarged view of one of crown blocks, one of first middle blocks, and one of first shoulder blocks of FIG. 1.
FIG. 3 is a conceptual graph of rigidity distribution of the tread portions of various tires.
FIG. 4 is an enlarged cross-sectional view of one of first shoulder sipes of FIG. 2 taken along the longitudinal direction thereof.
FIG. 5 is an enlarged cross-sectional view of one of second shoulder sipes of FIG. 2 taken along the longitudinal direction thereof.
FIG. 6 is an enlarged cross-sectional view of one of middle sipes of FIG. 2 taken along the longitudinal direction thereof.
FIG. 7 is an enlarged cross-sectional view of one of shallow sipes of FIG. 2 taken along the longitudinal direction thereof.
FIG. 8 is an enlarged view of the outline of one of the first oblique grooves of FIG. 1.
FIG. 9 is a development view of a tread portion of a tire in Reference.

### DETAILED DESCRIPTION OF THE INVENTION

An embodiment of the present invention will now be described in conjunction with accompanying drawings. The drawings are described to incorporate the features of the present invention, but may include exaggerated expressions or expressions different from the actual dimensional ratios of the structures in order to aid in understanding the present invention. Further, throughout the embodiments, identical or common elements are assigned with the same reference signs, and redundant explanations are omitted. Furthermore, well-known configurations can be adopted as appropriate for configurations not described in the present specification.

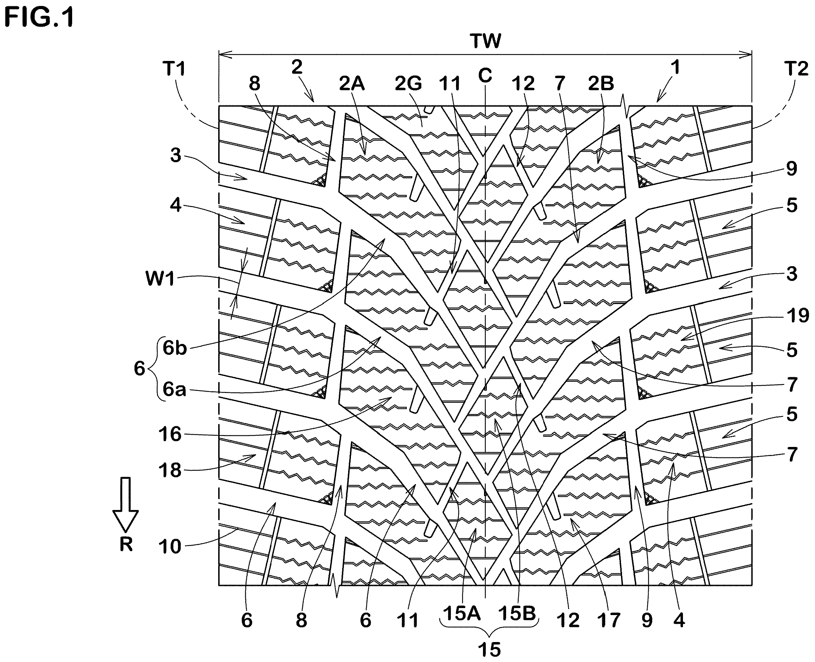

FIG. 1 shows a development view of a tread portion 2 of a tire 1 according to the present embodiment. As shown in FIG. 1, the tire 1 of the present embodiment is a pneumatic tire for passenger cars, and is used as a so-called all-season tire that combines sufficient dry performance with sufficient on-ice/on-snow performance. However, the tire of the present invention is not limited to such a mode.

The tire 1 of the present invention has the tread portion 2 bound with an intended tire rotational direction (R). The tire rotational direction (R) is indicated by letters or symbols on a sidewall portion (not shown), for example.

The tread portion 2 of the tire 1 in the present embodiment includes a first tread edge T1 on one side in the tire axial direction and a second tread edge T2 on the other side in the tire axial direction. In each drawing in the present specification, the tread edge on the left side of the tire equator (C) is designated as the first tread edge T1, and the tread edge on the right side of the tire equator (C) is designated as the second tread edge T2. The tread portion 2 includes a first tread portion 2A demarcated between the tire equator (C) and the first tread edge T1, and a second tread portion 2B demarcated between the tire equator (C) and the second tread edge T2. The first tread portion 2A and the second tread portion 2B are configured to be substantially line-symmetrical about the tire equator (C) except that they are misaligned in a tire circumferential direction. Therefore, each configuration of the first tread portion 2A can be applied to the second tread portion 2B.

The first tread edge T1 and the second tread edge T2 correspond to the axial edges of a ground contact surface of the tire 1 when the tire 1 in a standard state is in contact with a flat surface with zero camber angle by being loaded with 70% of a standard tire load.

In the case of a tire for which various standards have been established, the "standard state" refers to a state in which the tire 1 is mounted on a standard rim (not shown), inflated to a standard inner pressure, and loaded with no tire load. In the case of a tire for which various standards have not been established, the standard state means a standard use state according to the intended use of the tire, in which the tire is not mounted on a vehicle and is loaded with no tire load. In the present specification, unless otherwise noted, the dimensions of various parts of the tire are values measured in the standard state described above.

The "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO.

In the case of a tire for which various standards have been established, the "standard tire load" refers to a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. Further, in the case of a tire for which various standards have not been established, the "standard tire load" refers to the maximum load that can be applied when using the tire in accordance with the above-mentioned standards.

The tread portion 2 includes a plurality of grooves 3 provided between the first tread edge T1 and the second tread edge T2, and a plurality of blocks 4 demarcated by the grooves 3.

The grooves 3 include a plurality of first oblique grooves 6, a plurality of second oblique grooves 7, a plurality of first shoulder longitudinal grooves 8, and a plurality of first crown longitudinal grooves 11. The first oblique grooves 6 extend at least from the first tread edge T1 toward the tire equator (C) side, inclining toward a heel side (leading side) in the tire rotational direction (R). The second oblique grooves 7 extend at least from the second tread edge T2 toward the tire equator (C) side at an angle toward the heel side in the tire rotational direction (R). Each of the first oblique grooves 6 and the second oblique grooves 7 has a groove width W1 in the range from 2 to 12 mm. Further, each of the first oblique grooves 6 and the second oblique grooves 7 has a depth in the range from 5 to 12 mm.

It should be noted that, when the numerical ranges of various parameters are described in the present specification, the numerical ranges mean the numerical ranges for the average values of the parameters unless otherwise specified. Therefore, the above-mentioned numerical ranges of the groove width and the depth of the oblique grooves refer to the average numerical ranges of the groove width and the depth measured at multiple positions on the inclined grooves. The same applies to other parameters described below.

Each of the first shoulder longitudinal grooves 8 extends in the tire circumferential direction so as to communicate with two of the first oblique grooves 6 adjacent to each other in the tire circumferential direction. In other words, each of the first shoulder longitudinal grooves 8 extends in the tire circumferential direction so as to connect a respective one of the first oblique grooves 6 with another first oblique grooves 6 adjacent thereto in the tire circumferential direction. The first crown longitudinal grooves 11 are disposed between the first shoulder longitudinal grooves 8 and the tire equator (C) and each communicate with two first oblique grooves 6, i.e., each of the first crown longitudinal grooves 11 connects a respective one of the first oblique grooves 6 with another first oblique grooves 6 adjacent thereto in the tire circumferential direction.

In the present embodiment, the grooves 3 include a plurality of second shoulder longitudinal grooves 9 and a plurality of second crown longitudinal grooves 12 arranged in the second tread portion 2B. The second shoulder longitudinal grooves 9 have essentially the same features (configuration) as the first shoulder longitudinal grooves 8. Further, the second crown longitudinal grooves 12 have substantially the same features (configuration) as the first crown longitudinal grooves 11. Therefore, the features (configuration) of the first shoulder longitudinal grooves 8 described below may also be applied to the second shoulder longitudinal grooves 9. The first crown longitudinal grooves 11 and the second crown longitudinal grooves 12 have a similar relationship, i.e., the features (configuration) of the first crown longitudinal grooves 11 described below may also be applied to the second crown longitudinal grooves 12.

In the present invention, each of the first oblique grooves 6 communicates with and terminates in one of the second oblique grooves 7. Further, each of the second oblique grooves 7 communicates with and terminates in one of the first oblique grooves 6.

The blocks 4 include crown blocks 15, first shoulder blocks 18, and first middle blocks 16. The crown blocks 15 in the present embodiment include first crown blocks 15A and second crown blocks 15B arranged alternately in the tire circumferential direction. Each of the first crown blocks 15A is demarcated by two first oblique grooves 6, one second oblique groove 7, and one first crown longitudinal groove 11. Each of the second crown blocks 15B is demarcated by two second oblique grooves 7, one first oblique groove 6, and one second crown longitudinal groove 12.

Each of the first shoulder blocks 18 includes the first tread edge T1 and is demarcated by two first oblique grooves 6 and one first shoulder longitudinal groove 8. The first middle blocks 16 are disposed between the crown blocks 15 and the first shoulder blocks 18.

In the present embodiment, the blocks 4 further include second shoulder blocks 19 and second middle blocks 17. The second shoulder blocks 19 have substantially the same features (configuration) as the first shoulder blocks 18. The second middle blocks 17 have substantially the same features (configuration) as the first middle blocks 16. Therefore, the features of the first shoulder blocks 18 described below may also be applied to the second shoulder blocks 19. The first middle blocks 16 and the second middle blocks 17 have a similar relationship, i.e., the features (configuration) of the first middle blocks 16 described below may also be applied to the second middle blocks 17.

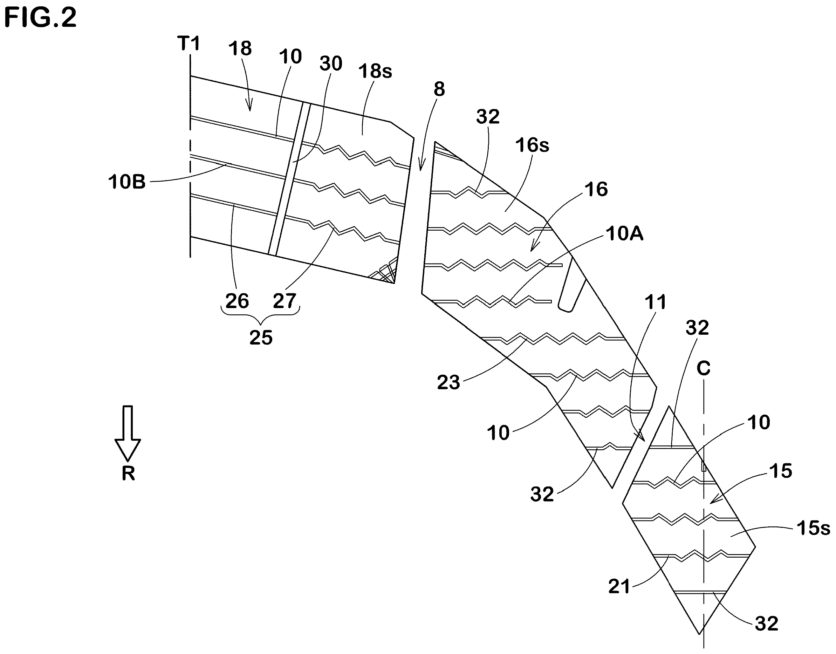

FIG. 2 shows an enlarged view of one of the crown blocks 15, one of the first middle blocks 16, and one of the first shoulder blocks 18. As shown in FIG. 2, a ground contacting surface (18s) of each of the first shoulder blocks 18, a ground contacting surface (16s) of each of the first middle blocks 16, and a ground contacting surface (15s) of each of the crown blocks 15 are each provided with a plurality of sipes 10. Hereinafter, the sipes 10 formed on the crown blocks 15 may be referred to as crown sipes 21, the sipes 10 formed on the first middle blocks 16 may be referred to as middle sipes 23, and the sipes 10 formed on the first shoulder blocks 18 may be referred to as shoulder sipes 25.

**In** the present specification, the "sipe" means an incision with a small width, in which two sipe walls included in a sipe main body come into contact with each other when a ground contact load acts on the tread portion 2, and thus the rigidity of a block can be maintained. The sipe main body means a portion where the two sipe walls extend approximately parallel to each other (10 degrees or less, for example) in a tire radial direction. Further, from the point of view of exerting the above-mentioned effects, the width between the two sipe walls in the sipe main body is 1.5 mm or less, preferably from 0.4 to 1.2 mm, and more preferably from 0.4 to 1.0 mm, for example. Each of the sipes in the present embodiment extends with a constant width from an opening portion thereof to a bottom portion thereof. It should be noted that the sipes may have chamfered portions formed on their edges. Furthermore, the sipes may also have so-called flask bottoms with the width increased at their bottoms.

For each of the blocks, when a sipe density (mm/mm²) is defined as a value of a total length (mm) of the sipes 10 formed on the ground contacting surface divided by an area (mm²) of the ground contacting surface, a sipe density SDc of each of the crown blocks 15, a sipe density SDm of each of the first middle blocks 16, and a sipe density SDs of each of the first shoulder blocks 18 satisfy the following Expressions (1) and (2) in the present invention. As a result, it is possible that the tire of the present invention improves the on-ice/on-snow performance while maintaining the dry performance. The reasons for this are as follows. $SDc > SDs$ Expression (1) $SDm > SDs$ Expression (2)

As shown in FIG. 1, in tire 1 of the present invention, each of the first oblique grooves 6 terminates in conjunction with one of the second oblique grooves 7. Further, each of the second oblique grooves 7 terminates in conjunction with one of the first oblique grooves 6. Therefore, in the tire 1 of the present invention, the communicating parts of these grooves firmly compact the snow and thus exert a large snow shearing force during running on an icy/snowy road. Furthermore, since the ground contacting surface of each of the blocks is provided with multiple sipes 10, these edges provide a large frictional force even on an icy/snowy road. Thereby, the on-ice/on-snow performance is improved.

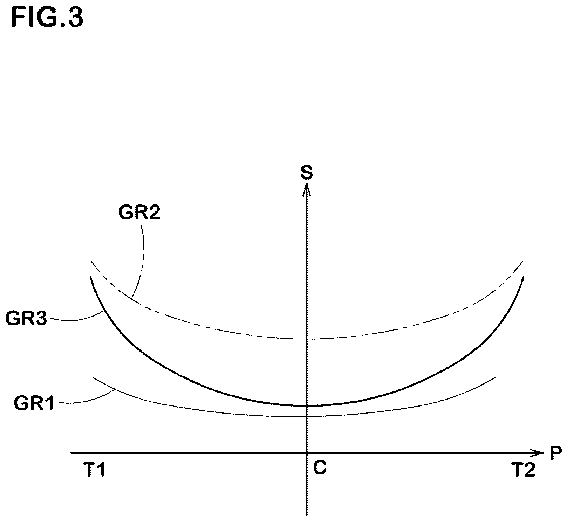

FIG. 3 shows a conceptual graph of the rigidity distribution of the tread portions of various tires. The horizontal axis (P) in FIG. 3 indicates the axial position in the tread portion, with the center position corresponding to the tire equator (C), the left side corresponding to the first tread edge T1 side, and the right side corresponding to the second tread edge T2 side. The vertical axis (S) in FIG. 3 indicates the rigidity of various parts of the tread portion. The graph GR1 in FIG. 3 shows the rigidity distribution of a conventional studless tire. The graph GR2 shows the rigidity distribution of a conventional summer tire. The graph GR3 shows the rigidity distribution of the tire 1 in the present embodiment.

As can be seen from the graphs GR1 and GR2 in FIG. 3, the studless tire that is designed with an emphasis on the on-ice/on-snow performance has an overall low rigidity of the tread portion due to the provision of many sipes in the tread portion. On the other hand, the conventional summer tire, which is not designed for running on icy and snowy roads and are designed with an emphasis on the dry performance, has a relatively high rigidity in the tread portion.

The inventors have conducted extensive research into the degree of contribution of various parts of the tread portion during running on dry roads and during running on icy/snowy roads. As a result, the inventors have found that it is preferred to maintain the rigidity of the shoulder blocks in order to maintain the dry performance, while it is preferred to decrease the rigidity of the middle blocks and the crown blocks by providing many sipes in the middle blocks and the crown blocks in order to improve the on-ice/on-snow performance.

Based on this knowledge, in the present invention, the sipe density of each of the blocks satisfies the Expressions (1) and (2) described above. Therefore, as shown in graph GR3 in FIG. 3, in the tread portion 2 of the tire 1 of the present invention, the first shoulder blocks 18 provide high rigidity and maintain the dry performance, while the first middle blocks 16 and the crown blocks 15 provide large friction force by the sipes 10, thereby, the on-ice/on-snow performance is improved. Due to this mechanism, it is possible that the tire 1 of the present invention improves the on-ice/on-snow performance while maintaining the dry performance, compared to conventional all-season tires.

As shown in FIG. 2, from the point of view of achieving a well-balanced improvement in the dry performance and the on-ice/on-snow performance, the sipe density SDs of the first shoulder blocks 18 is in the range from 0.10 to 0.15 (mm/mm²), and preferably in the range from 0.12 to 0.14 (mm/mm²), for example. Similarly, the sipe density SDc of the crown blocks 15 and the sipe density SDm of the first middle blocks 16 are in the range from 0.17 to 0.23 (mm/mm²), and preferably in the range from 0.20 to 0.22 (mm/mm²), for example.

Further, it is preferred that the sipe density SDc of the crown blocks 15 and the sipe density SDm of the first middle blocks 16 are each in the range from 140% to 160% of the sipe density SDs. Thereby, excellent on-ice/on-snow performance is exerted while uneven wear of the first middle blocks 16 and the crown blocks 15 is suppressed.

It is preferred that the sipe density SDc of the crown blocks 15 is in the range from 80% to 120% of the sipe density SDm of the first middle blocks 16. Therefore, the uneven wear of these blocks is further suppressed.

More detailed configurations of the present embodiment will be described below. It should be noted that each configuration described below shows a specific aspect of the present embodiment. Therefore, it goes without saying that the present invention can achieve the effects described above even if it does not have the configuration described below. Further, even if any one of the configurations described below is applied alone to the tire 1 of the present invention having the above-described features, an improvement in performance according to the applied configuration can be expected. Furthermore, when some of the configurations described below are applied in combination, a combined improvement in performance according to these configurations applied can be expected.

As shown in FIG. 1, the tread portion 2 includes a tread rubber 2G forming the ground contacting surfaces of the blocks 4. From the point of view of improving the dry performance and the on-ice/on-snow performance, the rubber hardness of the tread rubber 2G is in the range from 50 to 65 degrees, for example. It should be noted that the rubber hardness in the present specification refers to hardness measured by a type-A durometer measured in an environment of 23 degrees Celsius in accordance with the Japanese Industrial Standards JIS-K6253.

From a similar point of view, the land ratio of the tread portion 2 is in the range from 65% to 75%. It should be noted that the term "land ratio" in the present specification corresponds to the ratio of the actual ground contact surface area to the virtual ground contact surface area in a state in which all grooves and sipes in the tread portion 2 are filled.

Conventional all-season tires place emphasis on wet performance, and often have the tread width about 65% to 70% of the nominal width of the tire. In contrast, a tread width TW of the tire 1 in the present embodiment is set to from 75% to 85% of the nominal width of the tire, and more preferably to 80% or more of the nominal width. Therefore, the tread portion 2 has a sufficiently large ground contacting area, thereby, it is possible that excellent grip is exerted on dry roads and icy/snowy roads. It should be noted that the above-mentioned nominal width of the tire corresponds to the nominal cross-sectional width of the tire. In other words, if the tire size is "195/65R15", for example, the nominal width is 195 mm.

The tread portion 2 has a plurality of V-shaped block groups 5 arranged in the tire circumferential direction. Each of the block groups includes one of the crown blocks 15, one of the first middle blocks 16, one of the second middle blocks 17, one of the first shoulder blocks 18, and one of the second shoulder blocks 19 adjacent in the tire axial direction so as to form a V-shape. The tread portion 2 in the present embodiment is composed of 55 to 78 of the block groups 5 arranged over the entire circumference of the tire. However, the present invention is not limited to such an embodiment.

As shown in FIG. 2, each of the sipes 10 is disposed at an angle of 15 degrees or less with respect to the tire axial direction. It should be noted that this configuration means that the angle of an imaginary linear line connecting both ends of each sipe 10 with respect to the tire axial direction is 15 degrees or less. In a preferred embodiment, all of the sipes 10 formed on the tread portion 2 are arranged in the manner described above. Such an embodiment reliably improves traction performance and braking performance on icy/snowy roads, which are particularly important for all-season tires.

The sipes 10 of the present embodiment include sipes 10A (first sipes) each extending in a zigzag shape in a tread plan view and sipes 10B (second sipes) each extending linearly. Each of the sipes 10A extending in a zigzag manner also extends in a zigzag manner in the tire radial direction in a cross section perpendicular to the longitudinal direction thereof, and is configured as a so-called 3D sipe. It is possible that these sipes 10A extending in a zigzag pattern effectively maintain the rigidity of the blocks since the two sipe walls of each of the sipes 10 come into contact with each other so as to engage each other when ground contact pressure is applied.

Each of the first shoulder blocks 18 is provided with a plurality of first shoulder sipes 26 and a plurality of second shoulder sipes 27. Each of the first shoulder sipes 26 extends linearly from a respective one of longitudinal narrow grooves 30 (described later) to at least the first tread edge T1. Each of the second shoulder sipes 27 extends in a zigzag pattern from a respective one of the first shoulder longitudinal grooves 8 to a respective one of the longitudinal narrow grooves 30. Each of the first shoulder blocks 18 has two to four first shoulder sipes 26 arranged in the tire circumferential direction. The same is true for the second shoulder sipes 27, that is, each of the first shoulder blocks 18 has two to four second shoulder sipes 27 arranged in the tire circumferential direction. Therefore, each of the first shoulder blocks 18 has four to eight sipes 10 arranged therein.

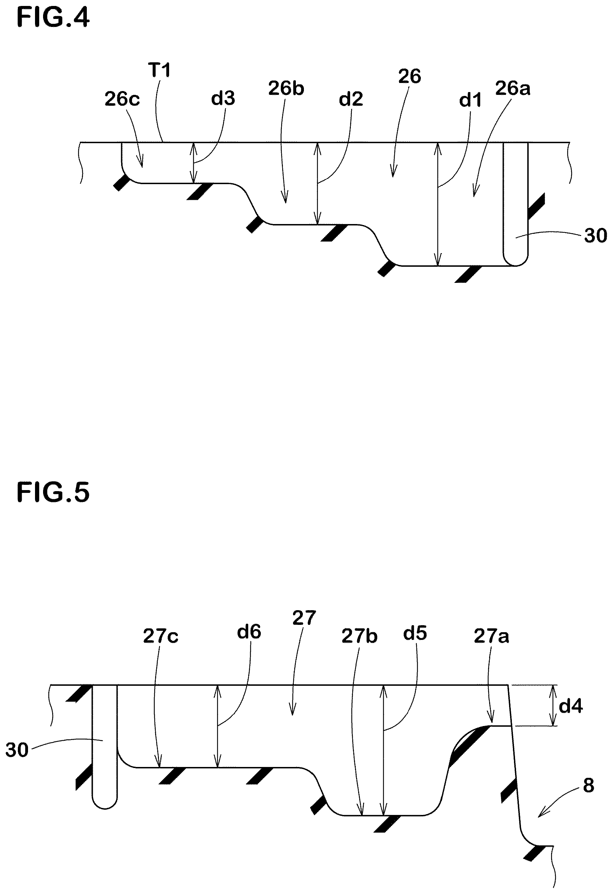

FIG. 4 is an enlarged cross-sectional view of one of the first shoulder sipes 26 taken along the longitudinal direction thereof. As shown in FIG. 4, each of the first shoulder sipes 26 has a depth that gradually decreases from the end on the tire equator (C) side toward the first tread edge T1 side. Each of the first shoulder sipes 26 includes a first portion (26a), a second portion (26b), and a third portion (26c), which have different depths from each other and arranged in this order from the end thereof on the longitudinal narrow groove 30 side toward the end thereof on the first tread edge T1 side. The first portion (26a) has a depth (d1) which is the maximum depth of the sipe. The depth (d1) is in the range from 65% to 80% of the maximum depth of the first oblique grooves 6 (not shown), for example. Further, the length of the first portion (26a) in the tread plan view (this is the so-called periphery length along the longitudinal direction of the sipe, and the same applies hereinafter) is in the range from 25% to 35% of the entire length of the each of the first shoulder sipes 26 on the ground contacting surface (18s) of the respective one of the first shoulder blocks 18, for example.

The second portion (26b) has a depth d2 which is smaller than the depth (d1). The depth d2 is in the range from 60% to 75% of the depth (d1), for example. Further, the length of the second portion (26b) in the tread plan view is in the range from 25% to 35% of the entire length of the respective one of the first shoulder sipes 26. The third portion (26c) has a depth (d3) which is smaller than the depth d2. The depth (d3) is in the range from 25% to 40% of the depth (d1), for example. Further, the length of the third portion (26c) in the tread plan view is in the range from 25% to 35% of the entire length of the respective one of the first shoulder sipes 26. The first shoulder sipes 26 having the depth distribution configured as such helps to improve the dry performance and the on-ice/on-snow performance in a good balance.

FIG. 5 is an enlarged cross-sectional view of one of the second shoulder sipes 27 taken along the longitudinal direction thereof. It should be noted that, since each of the second shoulder sipes 27 extends in a zigzag shape, the sipe walls thereof include projections and recesses and ridges that form the boundaries between them, but these are omitted in FIG. 5. The same applies to drawings showing cross sections of other sipes in the present specification. As shown in FIG. 5, each of the second shoulder sipes 27 includes a first portion (27a) (second first portion), a second portion (27b) (second second portion), and a third portion (27c) (second third portion), which have different depths from each other and arranged in this order from the end on the first shoulder longitudinal groove 8 side toward the end on the longitudinal narrow groove 30 side.

The first portion (27a) of each of the second shoulder sipes 27 communicates with the respective one of the first shoulder longitudinal grooves 8 and has the smallest depth in the each of the second shoulder sipes 27. The second portion (27b) has a depth (d5) which is the maximum depth of the each of the second shoulder sipes 27. The first portion (27a) has a depth (d4) that is in the range from 25% to 35% of the depth (d5) of the second portion (27b). Further, the third portion (27c) has a depth (d6) that is greater than the depth (d4) of the first portion (27a) and smaller than the depth (d5) of the second portion (27b). The depth (d6) of the third portion (27c) is in the range from 60% to 70% of the depth (d5) of the second portion (27b), for example. The second shoulder sipes 27 each having the depth distribution configured as such can suppress excessive opening at the ends of the first shoulder longitudinal grooves 8, therefore, the dry performance is effectively maintained.

Further, the length of the first portion (27a) in the tread plan view is in the range from 10% to 25% of the entire length of the respective one of the second shoulder sipes 27. The length of the second portion (27b) in the tread plan view is in the range from 25% to 35% of the entire length of the respective one of the second shoulder sipes 27. The length of the third portion (27c) in the tread plan view is in the range from 40% to 60% of the entire length of the respective one of the second shoulder sipes 27.

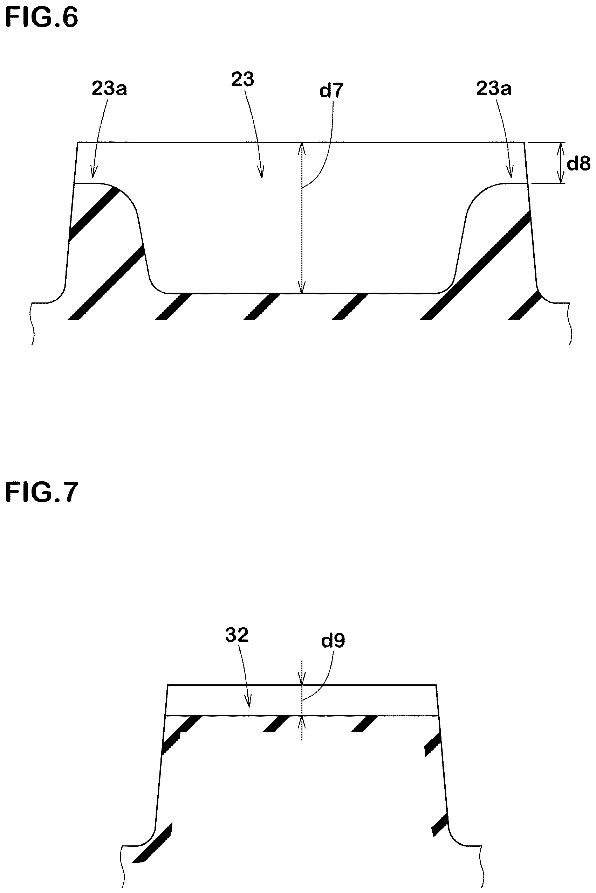

FIG. 6 is an enlarged cross-sectional view of one of the middle sipes 23 taken along the longitudinal direction thereof. As shown in FIG. 6, each of the middle sipes 23 are formed with shallow bottom portions (23a) at both ends, one at each end, thereof. Each of the shallow bottom portions (23a) has a depth (d8) in the range from 20% to 35% of a maximum depth (d7) of the respective one of the middle sipes 23, for example. It is possible that the middle sipes 23 configured as such prevent opening at both ends thereof and thus improve the on-ice/on-snow performance while reliably maintaining the dry performance. It should be noted that this cross-sectional shape may also be employed for the crown sipes 21 (shown in FIG. 2).

As shown in FIG. 2, the first middle blocks 16 and the crown blocks 15 are each provided with a plurality of the sipes 10 each extending in the tire axial direction and arranged in the tire circumferential direction. Of these sipes 10, it is preferred that the sipes 10 provided on the circumferential end portions of each block are configured as shallow sipes 32 in each of the blocks 10. FIG. 7 shows an enlarged cross-sectional view of one of the shallow sipes 32 taken along the longitudinal direction thereof. As shown in FIG. 7, each of the shallow sipes 32 has a depth (d9) in the range from 0.5 to 2.0 mm, for example. By arranging the shallow sipes 32 configured as such at the end portions of the blocks, it is possible that damages such as chipping of the blocks is suppressed.

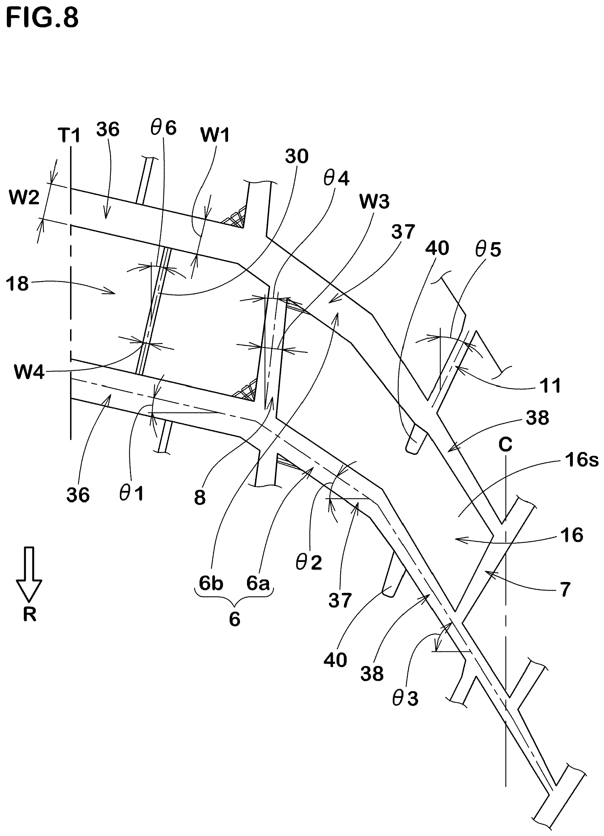

FIG. 8 shows an enlarged view of the outline of one of the first oblique grooves 6 in FIG. 1. It should be noted that the sipes arranged in the land region are omitted in FIG. 8. As shown in FIG. 8, the first oblique grooves 6 include main first oblique grooves (6a) and sub first oblique grooves (6b) arranged alternately, one by one in the present embodiment, in the tire circumferential direction, for example. Each of the main first oblique grooves (6a) terminates on the second tread edge T2 (shown in FIG. 1) side of the tire equator (C), i.e., terminates after crossing the tire equator (C). Each of the sub first oblique grooves (6b) terminates without crossing the tire equator (C).

Each of the first oblique grooves 6 has an angle with respect to the tire axial direction increasing toward the tire equator (C), for example. The first oblique grooves 6 configured as such provide the snow shearing force in multiple directions, therefore, they help to improve the on-snow traction performance and on-snow cornering performance.

Each of the first oblique grooves 6 includes a plurality of groove portions extending linearly and obliquely with respect to the tire axial direction, for example. As a preferred embodiment, the total length of the linearly extending groove edges is 80% or more of the total length of the entire groove edges in each of the first oblique grooves 6 of the present embodiment.

Each of the first oblique grooves 6 includes a first groove portion 36, a second groove portion 37, and a third groove portion 38, for example. The first groove portion 36 extends linearly and obliquely with respect to the tire axial direction from at least the first tread edge T1, for example. The second groove portion 37 is continuous with the first groove portion 36 and extends linearly at a larger angle than the first groove portion 36 with respect to the tire axial direction. The third groove portion 38 is continuous with the second groove portion 37 and extends at a larger angle than the second groove portion 37 with respect to the tire axial direction. In the present embodiment, the third groove portion 38 of each of the main first oblique grooves (6a) communicates with a respective one of the second oblique grooves 7 across the tire equator (C), and the third groove portion 38 of each of the sub first oblique grooves (6b) communicates with a respective one of the second oblique grooves 7 without crossing the tire equator (C).

The first groove portion 36 has an angle θ1 in the range from 5 to 15 degrees with respect to the tire axial direction is, for example. The second groove portion 37 has an angle θ2 in the range from 25 to 35 degrees with respect to the tire axial direction is, for example. The third groove portion 38 has an angle θ3 in the range from 45 to 60 degrees with respect to the tire axial direction, for example. Thereby, during running on icy/snowy roads, the edges of each of the groove portions exert frictional forces in multiple directions, therefore, excellent on-ice/on-snow performance is exerted.

It is preferred that the groove width W1 of each of the first oblique grooves 6 decreases from the first tread edge T1 side toward the tire equator (C) side. This makes it easier for water in the first oblique grooves 6 to be guided toward the first tread edge T1 side during running on wet roads, thereby, the wet performance is improved.

The heel side end in the tire rotational direction (R) of each of the first shoulder longitudinal grooves 8 is connected to the groove edge of the first groove portion 36 and the grove edge of the second groove portion 37 of one of the first oblique grooves 6 immediately adjacent thereto on the heel side, for example. In other words, the heel side ed of each of the first shoulder longitudinal grooves 8 is connected to the connection portion between the first groove portion 36 and the second groove portion 37 of one of the first oblique grooves 6 immediately adjacent thereto on the heel side, for example. Further, the toe side end in the tire rotational direction (R) of each of the first shoulder longitudinal grooves 8 is connected to the groove edge of the second groove portion 37 of one of the first oblique grooves 6 immediately adjacent thereto on the toe side. Therefore, each of the first shoulder longitudinal grooves 8 is inclined to the first tread edge T1 side as it goes toward the heel side in the tire rotational direction (R). Each of the first shoulder longitudinal grooves 8 has an angle θ4 in the range from 5 to 15 degrees with respect to the tire circumferential direction, for example. It is possible that the first shoulder longitudinal grooves 8 configured as such provide large frictional force in the tire axial direction.

It is preferred that each of the first shoulder longitudinal grooves 8 has a groove width continuously increasing toward the heel side in the tire rotational direction (R). Further, it is preferred that a groove width W3 of each of the first shoulder longitudinal grooves 8 is in the range from 50% to 70% of the maximum groove width W2 of each of the first oblique grooves 6. It is possible that the first shoulder longitudinal grooves 8 configured as such uses the rotation of the tire to pack the snow tightly inside, therefore, large snow shearing force is exerted.

Each of the first crown longitudinal grooves 11 communicates with the third groove portions 38 of two first oblique grooves 6 adjacent thereto on both sides in the tire circumferential direction. As a result, as shown in FIG. 2, each of the first crown longitudinal grooves 11 separates a respective one of the crown blocks 15 from a respective one of the first middle blocks 16. In addition, each of the first crown longitudinal grooves 11 is inclined toward the first tread edge T1 side as it goes toward the heel side in the tire rotational direction (R). As shown in FIG. 8, each of the first crown longitudinal grooves 11 has an angle θ5 in the range from 25 to 35 degrees with respect to the tire circumferential direction, for example. It is possible that the first crown longitudinal grooves 11 configured as such exert a well-balanced frictional force in the tire axial direction and the tire circumferential direction during running on icy/snowy roads.

Each of the first shoulder blocks 18 in the present embodiment is provided with one longitudinal narrow groove 30, for example. Each of the longitudinal narrow grooves 30 extends in the tire circumferential direction so as to communicate with the first groove portions 36 of two of the first oblique grooves 6 immediately adjacent thereto on both sides in the tire circumferential direction. Each of the longitudinal narrow grooves 30 is inclined to the first tread edge T1 side as it goes toward the heel side in the tire rotational direction (R). It is preferred that each of the longitudinal narrow grooves 30 has an angle θ6 greater than the angle θ4 of each of the first shoulder longitudinal grooves 8 with respect to the tire circumferential direction. Specifically, the angle θ6 of each of the longitudinal narrow grooves 30 is in the range from 10 to 25 degrees.

Each of the longitudinal narrow grooves 30 extends linearly with a constant groove width W4. The groove width W4 of each of the longitudinal narrow grooves 30 is smaller than the groove width W3 of each of the first shoulder longitudinal grooves 8 and smaller than the groove width of each of the first crown longitudinal grooves 11. In a preferred embodiment, the groove width W4 of each of the longitudinal narrow grooves 30 is in the range from 10% to 20% of the groove width W3 of each of the first shoulder longitudinal grooves 8. It is possible that the longitudinal narrow grooves 30 configured as such reliably maintains the dry performance.

As shown in FIG. 2, each of the longitudinal narrow grooves 30 is connected and communicates with the first shoulder sipes 26 and the second shoulder sipes 27. However, the tire 1 of the present invention is not limited to such a mode.

As shown in FIG. 8, each of the first middle blocks 16 in the present embodiment is provided with one middle short groove 40 that communicates with one of the first oblique grooves 6 immediately adjacent thereto and has a closed end terminating within the ground contacting surface (16s). In a preferred embodiment, the middle short grooves 40 communicating with the sub first oblique grooves (6b) overlap with regions obtained by extending the first crown longitudinal grooves 11 communicating with the sub first oblique grooves (6b) in the longitudinal direction. In other words, it is preferred that each of the sub first oblique grooves (6b) communicates with one of the middle short grooves 40 on the heel side and with one of the first crown longitudinal grooves 11 on the toe side, and that the communicated middle short groove 40 overlaps with the extension of the communicated first crown longitudinal groove 11 extended in the longitudinal direction thereof. With the groove arrangement configured as such, the sub first oblique grooves (6b) and the middle short grooves 40 work together to form hard snow blocks during running on icy/snowy roads, thereby, the on-ice/on-snow performance is further improved.

While detailed description has been made of the tire according to an embodiment of the present invention, the present invention can be embodied in various forms within the scope of set out in the claims without being limited to the illustrated embodiment.

### [Examples]

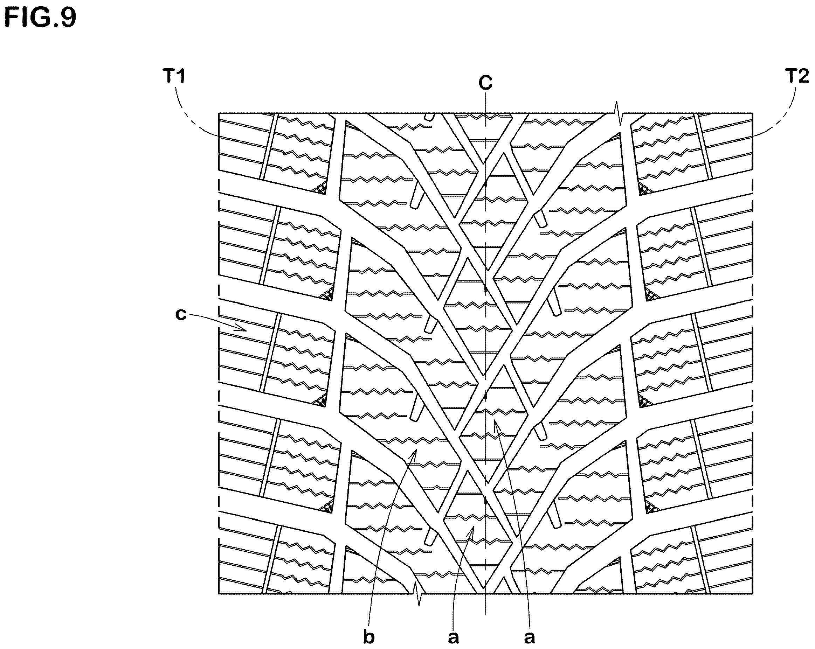

Pneumatic tires of size 195/65R15 having the tread pattern shown in FIG. 1 were made by way of test according to the specifications on Tables 1 and 2. Further, pneumatic tires having the tread pattern shown in FIG. 9 were made by way of test as tires in Reference. As shown in FIG. 9, the sipe density SDc of each of crown blocks (a) and the sipe density SDm of each of first middle blocks (b) are each smaller than the sipe density SDs of each of first shoulder blocks (c) in the tires in the Reference. The tires in the Reference are substantially the same as the tire shown in FIG. 1, except as noted above. Each of the test tires was tested for the dry performance and the on-ice/on-snow performance. The common specifications of the test tires and test methods are as follows:
Test vehicle: front wheel drive car with displacement of 1800cc
Test tire mounting position: all wheels
Tire rim: 15x6.0
Tire inner pressure: 230 kPa for front wheels, 240 kPa for rear wheels

### < Dry Performance >

While a test driver drove the above test vehicle on a dry road surface, running performance was evaluated by the test driver's sensory perception. The test results are indicated by an evaluation point of the running performance, wherein the larger the numerical value, the better the dry performance is.

### < On-ice/On-snow Performance >

While the test driver drove the above test vehicle on an icy/snowy road surface, the running performance was evaluated by the test driver's sensory perception. The test results are indicated by an evaluation point of the running performance, wherein the larger the numerical value, the better the on-ice/on-snow performance is.

**Table 1.**

| | | Reference | Example |
|---|---|---|---|
| Figure showing Tread Pattern | | FIG. 9 | FIG. 1 |
| Dry Performance | [evaluation point] | 6.0 | 5.8 |
| On-ice/On-snow Performance | [evaluation point] | 6.0 | 7.0 |

As shown in Table 1, the tires in the Reference have the dry performance and the on-ice/on-snow performance of 6.0 points. In contrast, the dry performance of the tires in Example is 5.8 points, which is only 0.2 points lower than that of the Reference. On the other hand, the on-ice/on-snow performance of the tires in the Example is 7.0 points, which is improved by 1.0 point compared to the tires in the Reference. As described above, it was confirmed that the tires in the Example exhibited excellent on-ice/on-snow performance while maintaining the dry performance.

### [Description of Reference Signs]

- 2: tread portion
- 3: groove
- 4: block
- 6: first oblique groove
- 7: second oblique groove
- 8: first shoulder longitudinal groove
- 10: sipe
- 11: first crown longitudinal groove
- 15: crown block
- 16: first middle block
- 18: first shoulder block
- R: tire rotational direction
- T1: first tread edge
- T2: second tread edge
- SDc: sipe density of crown block
- SDm: sipe density of first middle block
- SDs: sipe density of first shoulder block

## Claims

1. A tire (1) having a tread portion (2) bound with an intended tire rotational direction (R), wherein
the tread portion (2) comprising:
a first tread edge (T1);
a second tread edge (T2);
a plurality of grooves (3) provided between the first tread edge (T1) and the second tread edge (T2); and
a plurality of blocks (4) divided by the grooves (3),
wherein the grooves (3) include a plurality of first oblique grooves (6), a plurality of second oblique grooves (7), a plurality of first shoulder longitudinal grooves (8), and a plurality of first crown longitudinal grooves (11),
each of the first oblique grooves (6) extends obliquely to a heel side in the tire rotational direction (R) at least from the first tread edge (T1) toward a tire equator (C) side,
each of the second oblique grooves (7) extends obliquely to the heel side in the tire rotational direction (R) at least from the second tread edge (T2) toward the tire equator (C) side,
each of the first shoulder longitudinal grooves (8) extends in the tire circumferential direction so as to communicate with a respective two of the first oblique grooves (6) adjacent to each other in the tire circumferential direction,
the first crown longitudinal grooves (11) are disposed between the first shoulder longitudinal grooves (8) and the tire equator (C) and each communicate with two of the first oblique grooves (6) adjacent thereto on both sides in the tire circumferential direction,
each of the first oblique grooves (6) terminates in conjunction with one of the second oblique grooves (7),
each of the second oblique grooves (7) terminates in conjunction with one of the first oblique grooves (6),
the blocks include a plurality of crown blocks (15), a plurality of first shoulder blocks (18), and a plurality of first middle blocks (16),
the crown blocks (15) are arranged on the tire equator (C),
each of the first shoulder blocks (18) includes the first tread edge (T1) and is demarcated by a respective two of the first oblique grooves (6) adjacent to each other in the tire circumferential direction and a respective one of the first shoulder longitudinal grooves (8) between the respective two of the first oblique grooves (6),
the first middle blocks (16) are disposed between the crown blocks (15) and the first shoulder blocks (18),
each of the first shoulder blocks (18), the first middle blocks (16), and the crown blocks (15) has a ground contacting surface provided with a plurality of sipes (10), and
for each of the blocks (4), when a sipe density (mm/mm²) is defined as a value of a total length (mm) of the sipes (10) formed on the ground contacting surface divided by an area (mm²) of the ground contacting surface, a sipe density SDc of each of the crown blocks (15), a sipe density SDm of each of the first middle blocks (16), and a sipe density SDs of each of the first shoulder blocks (18) satisfy SDc > SDs and SDm > SDs,
**characterized in that**
each of the first shoulder longitudinal grooves (8) has a groove width continuously increasing toward the heel side in the tire rotational direction (R);
each of the first shoulder blocks (18) is provided with one longitudinal narrow groove (30) extending with a constant groove width (W4) so as to communicate with the respective two of the first oblique grooves (6) adjacent thereto on both sides in the tire circumferential direction;
the longitudinal narrow groove (30) is inclined to the first tread edge (T1) side as it goes toward the heel side in the tire rotational direction (R);
the sipes (10) on the ground contacting surface (18s) of each of the first shoulder blocks (18) include a plurality of first shoulder sipes (26) extending linearly from a respective one of the longitudinal narrow grooves (30) to at least the first tread edge (T1).

2. The tire according to claim 1, wherein the sipe density SDs is in the range from 0.10 to 0.15 (mm/mm²).

3. The tire according to claim 1 or 2, wherein each of the sipe density SDc and the sipe density SDm is in the range from 0.17 to 0.23 (mm/mm²).

4. The tire according to any one of claims 1 to 3, wherein each of the sipe density SDc and the sipe density SDm is in the range from 140% to 160% of the sipe density SDs.

5. The tire according to any one of claims 1 to 4, wherein the sipe density SDc is in the range from 80% to 120% of the sipe density SDm.

6. The tire according to any one of claims 1 to 5, wherein
a tread width (TW) is in the range from 75% to 85% of a nominal width of the tire, and
the tread width (TW) is a distance in the tire axial direction between the first tread edge (T1) and the second tread edge (T2).

7. The tire according to any one of claims 1 to 6, wherein each of the sipes (10) is arranged at an angle of 15 degrees or less with respect to the tire axial direction.

8. The tire according to any one of claims 1 to 7, wherein
the blocks (4) include second middle blocks (17) and second shoulder blocks (19),
each of the second middle blocks (17) is adjacent to a respective one of the crown blocks (15) on the second tread edge (T2) side via a respective one of the grooves,
each of the second shoulder blocks (19) is adjacent to a respective one of the second middle blocks (17) on the second tread edge (T2) side via a respective one of the grooves,
the tread portion has a plurality of V-shaped block groups (5) arranged in the tire circumferential direction, and
each of the block groups (5) includes one of the crown blocks (15), one of the first middle blocks (16), one of the second middle blocks, (17) one of the first shoulder blocks (18), and one of the second shoulder blocks (19).

9. The tire according to any one of claims 1 to 8, wherein
the first oblique grooves (6) include main first oblique grooves (6a) and sub first oblique grooves (6b) arranged alternately in the tire circumferential direction,
each of the main first oblique grooves (6a) terminates on the second tread edge (T2) side of the tire equator (C), and
each of the sub first oblique grooves (6b) terminates without crossing the tire equator (C).

10. The tire according to any one of claims 1 to 9, wherein each of the first middle blocks (16) is provided with one middle short groove (40) communicating with one of the first oblique grooves (6) adjacent to the each of the first middle blocks (16) and terminating so as to have a closed end within the ground contacting surface (16s) of the each of the first middle blocks (16).

11. The tire according to any one of claims 1 to 10, wherein
the tread portion (2) includes a tread rubber (2G) forming the ground contacting surfaces of the blocks (4),
the tread rubber (2G) has a rubber hardness in the range from 50 to 65 degrees, and
the rubber hardness is measured by a type-A durometer in an environment of 23 degrees Celsius in accordance with the Japanese Industrial Standards JIS-K6253.

## Patentansprüche

1. Reifen (1) mit einem Laufflächenabschnitt (2), der an eine beabsichtigte Reifendrehrichtung (R) gebunden ist, wobei
der Laufflächenabschnitt (2) umfasst:
eine erste Laufflächenkante (T1);
eine zweite Laufflächenkante (T2);
eine Vielzahl von Rillen (3), die zwischen der ersten Laufflächenkante (T1) und der zweiten Laufflächenkante (T2) vorgesehen sind; und
eine Vielzahl von Blöcken (4), die durch die Rillen (3) abgeteilt sind,
wobei die Rillen (3) eine Vielzahl von ersten schrägen Rillen (6), eine Vielzahl von zweiten schrägen Rillen (7), eine Vielzahl von ersten Schulterlängsrillen (8) und eine Vielzahl von ersten Kronenlängsrillen (11) umfassen,
jede der ersten schrägen Rillen (6) sich schräg zu einer Fersenseite in der Reifendrehrichtung (R) zumindest von der ersten Laufflächenkante (T1) in Richtung einer Reifenäquatorseite (C) erstreckt,
jede der zweiten schrägen Rillen (7) sich schräg zu der Fersenseite in der Reifendrehrichtung (R) zumindest von der zweiten Laufflächenkante (T2) in Richtung der Reifenäquatorseite (C) erstreckt,
jede der ersten Schulterlängsrillen (8) sich in der Reifenumfangsrichtung erstreckt, um mit jeweils zwei der ersten schrägen Rillen (6) in Verbindung zu stehen, die in der Reifenumfangsrichtung benachbart zueinander sind,
die ersten Kronenlängsrillen (11) zwischen den ersten Schulterlängsrillen (8) und dem Reifenäquator (C) angeordnet sind und jeweils mit zwei der ersten schrägen Rillen (6) in Verbindung stehen, die dazu auf beiden Seiten in der Reifenumfangsrichtung benachbart sind,
jede der ersten schrägen Rillen (6) in Verbindung mit einer der zweiten schrägen Rillen (7) endet,
jede der zweiten schrägen Rillen (7) in Verbindung mit einer der ersten schrägen Rillen (6) endet,
die Blöcke eine Vielzahl von Kronenblöcken (15), eine Vielzahl von ersten Schulterblöcken (18) und eine Vielzahl von ersten Mittelblöcken (16) umfassen,
die Kronenblöcke (15) auf dem Reifenäquator (C) angeordnet sind,
jeder der ersten Schulterblöcke (18) die erste Laufflächenkante (T1) umfasst und durch jeweils zwei der ersten schrägen Rillen (6), die in der Reifenumfangsrichtung benachbart zueinander sind, und eine jeweilige der ersten Schulterlängsrillen (8) zwischen den jeweiligen zwei der ersten schrägen Rillen (6) abgegrenzt ist,
die ersten Mittelblöcke (16) zwischen den Kronenblöcken (15) und den ersten Schulterblöcken (18) angeordnet sind,
jeder der ersten Schulterblöcke (18), der ersten Mittelblöcke (16) und der Kronenblöcke (15) eine Bodenkontaktfläche aufweist, die mit einer Vielzahl von Feinschnitten (10) versehen ist, und
für jeden der Blöcke (4), wenn eine Feinschnittdichte (mm/mm²) als ein Wert einer Gesamtlänge (mm) der auf der Bodenkontaktfläche ausgebildeten Feinschnitte (10) geteilt durch eine Fläche (mm²) der Bodenkontaktfläche definiert ist, eine Feinschnittdichte SDc jedes der Kronenblöcke (15), eine Feinschnittdichte SDm jedes der ersten Mittelblöcke (16) und eine Feinschnittdichte SDs jedes der ersten Schulterblöcke (18) SDc > SDs und SDm > SDs erfüllen,
**dadurch gekennzeichnet, dass**
jede der ersten Schulterlängsrillen (8) eine Rillenbreite aufweist, die in Richtung der Fersenseite in der Reifendrehrichtung (R) kontinuierlich zunimmt;
jeder der ersten Schulterblöcke (18) mit einer schmalen Längsrille (30) versehen ist, die sich mit einer konstanten Rillenbreite (W4) so erstreckt, dass sie mit den jeweiligen zwei der ersten schrägen Rillen (6) in Verbindung steht, die dazu auf beiden Seiten in der Reifenumfangsrichtung benachbart sind;
die schmale Längsrille (30) zu der Seite der ersten Laufflächenkante (T1) geneigt ist, wenn sie in Richtung der Fersenseite in der Reifendrehrichtung (R) verläuft;
die Feinschnitte (10) auf der Bodenkontaktfläche (18s) jedes der ersten Schulterblöcke (18) eine Vielzahl von ersten Schulterfeinschnitten (26) umfassen, die sich geradlinig von einer jeweiligen der schmalen Längsrillen (30) zu mindestens der ersten Laufflächenkante (T1) erstrecken.

2. Reifen nach Anspruch 1, wobei die Feinschnittdichte SDs im Bereich von 0,10 bis 0,15 (mm/mm²) liegt.

3. Reifen nach Anspruch 1 oder 2, wobei sowohl die Feinschnittdichte SDc als auch die Feinschnittdichte SDm im Bereich von 0,17 bis 0,23 (mm/mm²) liegt.

4. Reifen nach einem der Ansprüche 1 bis 3, wobei sowohl die Feinschnittdichte SDc als auch die Feinschnittdichte SDm im Bereich von 140 % bis 160 % der Feinschnittdichte SDs liegt.

5. Reifen nach einem der Ansprüche 1 bis 4, wobei die Feinschnittdichte SDc im Bereich von 80 % bis 120 % der Feinschnittdichte SDm liegt.

6. Reifen nach einem der Ansprüche 1 bis 5, wobei
eine Laufflächenbreite (TW) im Bereich von 75 % bis 85 % einer Nennbreite des Reifens liegt, und
die Laufflächenbreite (TW) ein Abstand in der Reifenaxialrichtung zwischen der ersten Laufflächenkante (T1) und der zweiten Laufflächenkante (T2) ist.

7. Reifen nach einem der Ansprüche 1 bis 6, wobei jeder der Feinschnitte (10) in einem Winkel von 15 Grad oder weniger in Bezug auf die Reifenaxialrichtung angeordnet ist.

8. Reifen nach einem der Ansprüche 1 bis 7, wobei
die Blöcke (4) zweite Mittelblöcke (17) und zweite Schulterblöcke (19) umfassen,
jeder der zweiten Mittelblöcke (17) über eine jeweilige der Rillen zu einem jeweiligen der Kronenblöcke (15) auf der Seite der zweiten Laufflächenkante (T2) benachbart ist,
jeder der zweiten Schulterblöcke (19) über eine jeweilige der Rillen zu einem jeweiligen der zweiten Mittelblöcke (17) auf der Seite der zweiten Laufflächenkante (T2) benachbart ist,
der Laufflächenabschnitt eine Vielzahl von V-förmigen Blockgruppen (5) aufweist, die in der Reifenumfangsrichtung angeordnet sind, und
jede der Blockgruppen (5) einen der Kronenblöcke (15), einen der ersten Mittelblöcke (16), einen der zweiten Mittelblöcke (17), einen der ersten Schulterblöcke (18) und einen der zweiten Schulterblöcke (19) umfasst.

9. Reifen nach einem der Ansprüche 1 bis 8, wobei
die ersten schrägen Rillen (6) erste schräge Hauptrillen (6a) und erste schräge Nebenrillen (6b) umfassen, die abwechselnd in der Reifenumfangsrichtung angeordnet sind,
jede der ersten schrägen Hauptrillen (6a) auf der Seite der zweiten Laufflächenkante (T2) des Reifenäquators (C) endet, und
jede der ersten schrägen Nebenrillen (6b) endet, ohne den Reifenäquator (C) zu kreuzen.

10. Reifen nach einem der Ansprüche 1 bis 9, wobei jeder der ersten Mittelblöcke (16) mit einer mittleren kurzen Rille (40) versehen ist, die mit einer der ersten schrägen Rillen (6) in Verbindung steht, die zu jedem der ersten Mittelblöcke (16) benachbart ist, und so endet, dass sie ein geschlossenes Ende innerhalb der Bodenkontaktfläche (16s) jedes der ersten Mittelblöcke (16) aufweist.

11. Reifen nach einem der Ansprüche 1 bis 10, wobei
der Laufflächenabschnitt (2) einen Laufflächengummi (2G) umfasst, der die Bodenkontaktflächen der Blöcke (4) bildet,
der Laufflächengummi (2G) eine Gummihärte im Bereich von 50 bis 65 Grad aufweist, und
die Gummihärte mit einem Typ-A-Durometer in einer Umgebung von 23 Grad Celsius gemäß den japanischen Industriestandards JIS-K6253 gemessen ist.

## Revendications

1. Pneumatique (1) ayant une portion formant bande de roulement (2) liée à une direction de rotation du pneumatique par conception (R), dans lequel
la portion formant bande de roulement (2) comprend :
un premier bord de bande de roulement (T1) ;
un deuxième bord de bande de roulement (T2) ;
une pluralité de rainures (3) prévues entre le premier bord de bande de roulement (T1) et le deuxième bord de bande de roulement (T2) ; et
une pluralité de blocs (4) divisés par les rainures (3),
dans lequel les rainures (3) incluent une pluralité de premières rainures obliques (6), une pluralité de deuxièmes rainures obliques (7), une pluralité de premières rainures longitudinales d'épaulement (8), et une pluralité de premières rainures longitudinales de couronne (11),
chacune des premières rainures obliques (6) s'étend en oblique vers un côté talon dans la direction de rotation du pneumatique (R) au moins depuis le premier bord de bande de roulement (T1) vers un côté d'équateur de pneumatique (C),
chacune des deuxièmes rainures obliques (7) s'étend en oblique vers un côté talon dans la direction de rotation du pneumatique (R) au moins depuis le deuxième bord de bande de roulement (T1) vers le côté d'équateur de pneumatique (C),
chacune des premières rainures longitudinales d'épaulement (8) s'étend dans la direction circonférentielle du pneumatique de manière à communiquer avec deux rainures respectives parmi les premières rainures obliques (6) adjacentes l'une à l'autre dans la direction circonférentielle du pneumatique,
les premières rainures longitudinales de couronne (11) sont disposées entre les premières rainures longitudinales d'épaulement (8) et l'équateur de pneumatique (C) et chacune communique avec deux des premières rainures obliques (6) adjacentes à celle-ci sur les deux côtés dans la direction circonférentielle du pneumatique,
chacune des premières rainures obliques (6) se termine conjointement avec l'une des deuxièmes rainures obliques (7),
chacune des deuxièmes rainures obliques (7) se termine conjointement avec l'une des premières rainures obliques (6),
les blocs incluent une pluralité de blocs de couronne (15), une pluralité de premiers blocs d'épaulement (18), et une pluralité de premiers blocs médians (16),
les blocs de couronne (15) sont agencés sur l'équateur de pneumatique (C), chacun des premiers blocs d'épaulement (18) inclut le premier bord de bande de roulement (T1) et est délimité par deux rainures respectives parmi les premières rainures obliques (6) adjacentes l'une à l'autre dans la direction circonférentielle du pneumatique et une rainure respective parmi les premières rainures longitudinales d'épaulement (8) entre les deux rainures respectives parmi les premières rainures obliques (6),
les premiers blocs médians (16) sont disposés entre les blocs de couronne (15) et les premiers blocs d'épaulement (18),
chacun des premiers blocs d'épaulement (18), des premiers blocs médians (16), et des blocs de couronne (15) a une surface de contact au sol pourvue d'une pluralité de fentes (10), et
pour chacun des blocs (4), quand une densité de fente (mm/mm²) est définie en tant que valeur d'une longueur totale (mm) des fentes (10) formées sur la surface de contact au sol divisée par une aire (mm²) de la surface de contact au sol, une densité de fente SDc de chacun des blocs de couronne (15), une densité de fente SDm de chacun des premiers blocs médians (16), et une densité de fente SDs de chacun des premiers blocs d'épaulement (18) satisfont aux relations SDc > SDs et SDm > SDs,
**caractérisé en ce que**
chacune des premières rainures longitudinales d'épaulement (8) a une largeur de rainure augmentant en continu vers le côté talon dans la direction de rotation du pneumatique (R) ;
chacun des premiers blocs d'épaulement (18) est pourvu d'une rainure étroite longitudinale (30) s'étendant avec une largeur de rainure constante (W4) de manière à communiquer avec les deux rainures respectives parmi les premières rainures obliques (6) adjacentes à celle-ci sur les deux côtés dans la direction circonférentielle du pneumatique ;
la rainure étroite longitudinale (30) est inclinée vers le côté du premier bord de bande de roulement (T1) lorsqu'elle va vers le côté talon dans la direction de rotation du pneumatique (R) ;
les fentes (10) sur la surface de contact au sol (18s) de chacun des premiers blocs d'épaulement (18) incluent une pluralité de premières fentes d'épaulement (26) s'étendant linéairement depuis une rainure respective parmi les rainures étroites longitudinales (30) jusqu'à au moins le premier bord de bande de roulement (T1).

2. Pneumatique selon la revendication 1, dans lequel la densité de fente SDs est dans la plage allant de 0,10 à 0,15 (mm/mm²).

3. Pneumatique selon la revendication 1 ou 2, dans lequel chacune de la densité de fente SDc et de la densité de fente SDm est dans la plage allant de 0,17 à 0,23 (mm/mm²).

4. Pneumatique selon l'une quelconque des revendications 1 à 3, dans lequel chacune de la densité de fente SDc et de la densité de fente SDm est dans la plage allant de 140 % à 160 % de la densité de fente SDs.

5. Pneumatique selon l'une quelconque des revendications 1 à 4, dans lequel la densité de fente SDc est dans la plage allant de 80 % à 120 % de la densité de fente SDm.

6. Pneumatique selon l'une quelconque des revendications 1 à 5, dans lequel une largeur de bande de roulement (TW) est dans la plage allant de 75 % à 85 % d'une largeur nominale du pneumatique, et
la largeur de bande de roulement (TW) est une distance dans la direction axiale du pneumatique entre le premier bord de bande de roulement (T1) et le deuxième bord de bande de roulement (T2).

7. Pneumatique selon l'une quelconque des revendications 1 à 6, dans lequel chacune des fentes (10) est agencée sous un nom de 15 degrés ou moins par rapport à la direction axiale du pneumatique.

8. Pneumatique selon l'une quelconque des revendications 1 à 7, dans lequel les blocs (4) incluent des deuxièmes blocs médians (17) et des deuxièmes blocs d'épaulement (19),
chacun des deuxièmes blocs médians (17) est adjacent à un bloc respectif parmi les blocs de couronne (15) sur le côté du deuxième bord de bande de roulement (T2) via une rainure respective parmi les rainures,
chacun des deuxièmes blocs d'épaulement (19) est adjacent à un bloc respectif parmi les deuxièmes blocs médians (17) sur le côté du deuxième bord de bande de roulement (T2) via une rainure respective parmi les rainures,
la portion formant bande de roulement a une pluralité de groupes de blocs en forme de V (5) agencés dans la direction circonférentielle du pneumatique, et
chacun des groupes de blocs (5) inclut l'un des blocs de couronne (15), l'un des premiers blocs médians (16), l'un des deuxièmes blocs médians (17), l'un des premiers blocs d'épaulement (18), et l'un des deuxièmes blocs d'épaulement (19).

9. Pneumatique selon l'une des revendications 1 à 8, dans lequel
les premières rainures obliques (6) incluent des premières rainures obliques principales (6a) et des premières rainures obliques auxiliaires (6b) agencées en alternance dans la direction circonférentielle du pneumatique,
chacune des premières rainures obliques (6a) se termine sur le côté du deuxième bord de bande de roulement (T2) de l'équateur de pneumatique (C), et
chacune des premières rainures obliques auxiliaires (6b) se termine sans traverser l'équateur de pneumatique (C).

10. Pneumatique selon l'une des revendications 1 à 9, dans lequel chacun des premiers blocs médians (16) est pourvu d'une rainure courte médiane (40) communiquant avec l'une des premières rainures obliques (6) adjacentes audit chacun des premiers blocs médians (16) et se terminant de manière à avoir une extrémité fermée à l'intérieur de la surface de contact au sol (16s) dudit chacun des premiers blocs médians (16).

11. Pneumatique selon l'une des revendications 1 à 10, dans lequel
la portion formant bande de roulement (2) inclut un caoutchouc de bande de roulement (2G) formant les surfaces de contact au sol des blocs (4),
le caoutchouc de bande de roulement (2G) a une dureté de caoutchouc dans la plage allant de 50 à 65 degrés, et
la dureté de caoutchouc est mesurée par un duromètre de type A dans un environnement de 23 degrés Celsius selon la norme industrielle japonaise JIS-K6253.
